# EUROPEAN PATENT SPECIFICATION

(11) **EP 0 693 012 B1**
(45) Date of publication and mention of the grant of the patent: **28.01.1998**
(21) Application number: 94912130.5
(22) Date of filing: 30.03.1994
(51) Int. Cl.: B23B 27/16, B23B 27/22

(54) **CUTTING INSERT WITH CHIP CONTROL**
SCHNEIDEINSATZ MIT SPANKONTROLLE
PLAQUETTE DE COUPE A EVACUATION AMELIOREE DES COPEAUX

(30) Priority: 05.04.1993 SE 9301132
(43) Date of publication of application: 24.01.1996
(73) Proprietor: SANDVIK AKTIEBOLAG, 811 81 Sandviken (SE)
(72) Inventor: WIMAN, Jörgen, S-811 52 Sandviken (SE); MUREN, Sture, S-803 62 Gävle (SE); OLSSON, Jan-Olof, S-812 03 Kungsgarden (SE); ISAKSSON, Robert, S-810 28 Järbo (SE)
(86) International application number: SE9400290
(87) International publication number: WO9422622

(56) References cited:
- US-A- 4 988 242
- US-A- 5 044 840
- US-A- 5 116 167
- US-A- 5 147 159
- PATENT ABSTRACTS OF JAPAN, Vol. 14, No. 323, M-997; & JP,A,02 109 612 (TOSHIBA TUNGALOY CO LTD), 23 April 1990 (23.04.90)
- .

## Description

The present invention relates to a cutting insert for chip-breaking machining according to the pre-characterizing portion of claim 1 and as known from EP-A-0 360 774.

A multitude of known inserts have chip formers which consist of a plurality of ridges along the cutting edges. Further, in for instance SE-B-467 397 (≡ EP-A-0 360 774) cutting inserts are disclosed which comprise recesses arranged adjacent to each other in the chip surface, which recesses create ridges between each other. These ridges are perpendicular relative to the pertaining cutting edge and the distance between two adjacent ridges diminishes in a direction towards the middle of the cutting edge. Thus, the contact area between chip and ridge increases in a direction towards the middle of the cutting edge, which shall cause the chip to be led away from the surface of the work-piece in order not to damage it. However, this desired effect has turned out to be insufficient at some applications. Particularly, at out- and in-copying and at facing, often long chips with a large radius of curvature arise, which may scratch and damage the produced surface. Further, the contact surface between chip and chip surface becomes considerable at large cutting depths, which leads to an increased heat transfer to the cutting insert and, thus, to a shorter life. Moreover, no satisfactory chip control has been attained at small cutting depths, where in principle only the cutting corner is in engagement, particularly at high feeds.

Thus, a first object of the present invention is to provide a cutting insert which steers the chip flow away from the machined surface, in particular for turning at in- and out-copying and at facing.

A further object of the present invention is to achieve a good chip control at small cutting depths and large feeds.

Another object of the present invention is to reduce the heat transfer to the insert and, thus, to increase its life.

Still another object of the present invention is to provide a "universal" turning insert, which gives a good chip control at low, medium and high feeds by a polyvalent chip-breaking geometry, in combination with both a small, a medium and a large cutting depth.

These and further objects have been attained in a surprising way by forming said insert in accordance with the characterizing clause of claim 1. Said insert has each operative cutting corner formed with a banana-like or C-formed protrusion. It should be pointed out that by "banana-like" or "C-formed" is intended a protrusion which is continuously curved, by one or more radii, but also a more "boomerang-like" protrusion, the two legs of the "boomerang" being equally long.

For illustrative but non-limiting purposes, the invention will now be further described in connection with the appended drawings. In these are:
Figure 1 a double-sided cutting insert according to the invention in a perspective view;
Figure 2 a vertical cross-section of the insert according to figure 1 along the bisector plane B;
Figure 3 a vertical cross-section of the cutting insert according to figure 1 along the plane A;
Figure 4 a top view of the cutting insert according to figure 1;
Figure 5 a top view of a cutting corner of a single-sided insert; and
Figure 6 an enlargement of a cutting corner according to the invention in a perspective view.

The cutting insert according to the figures is generally designated by 10. It comprises an upper surface and a lower surface being substantially plane-parallel to the upper surface, and four substantially similar side surfaces 1 connecting those two surfaces. Further, it has a polygonal basic shape, in this case a rhombic basic form. It is made of a hard material, such as cemented carbide, a ceramic or bore nitride.

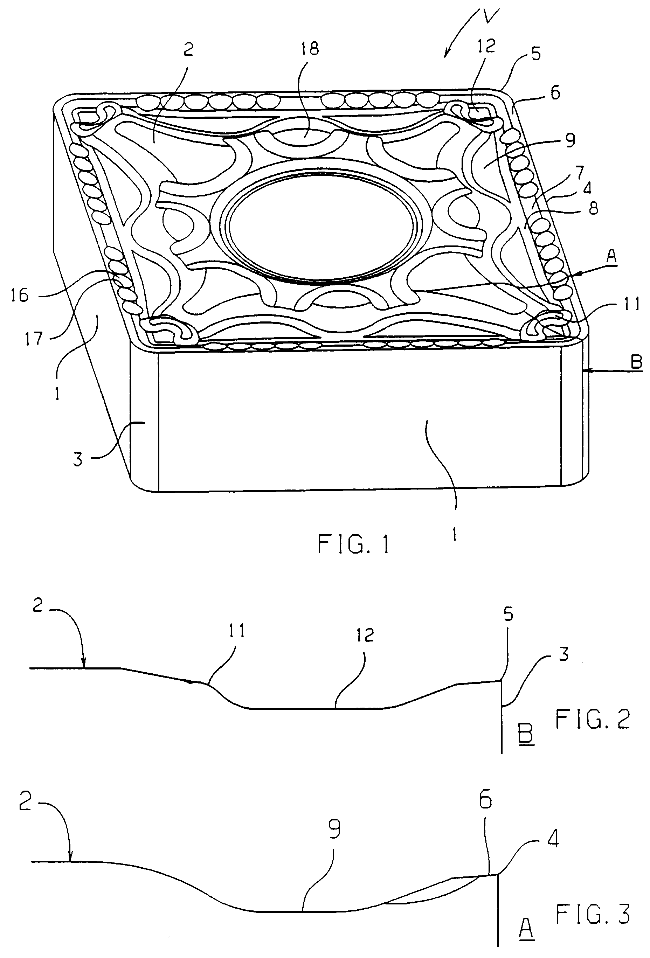

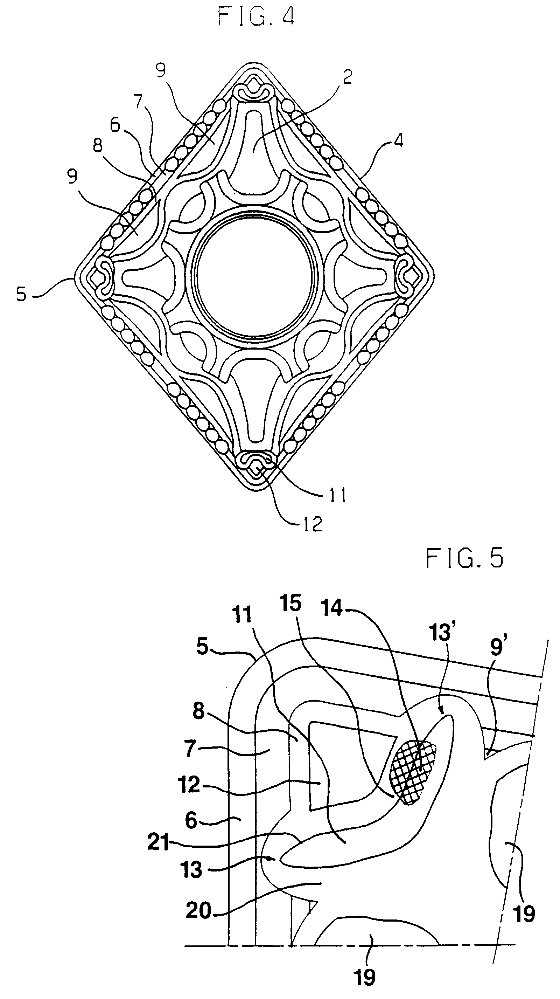

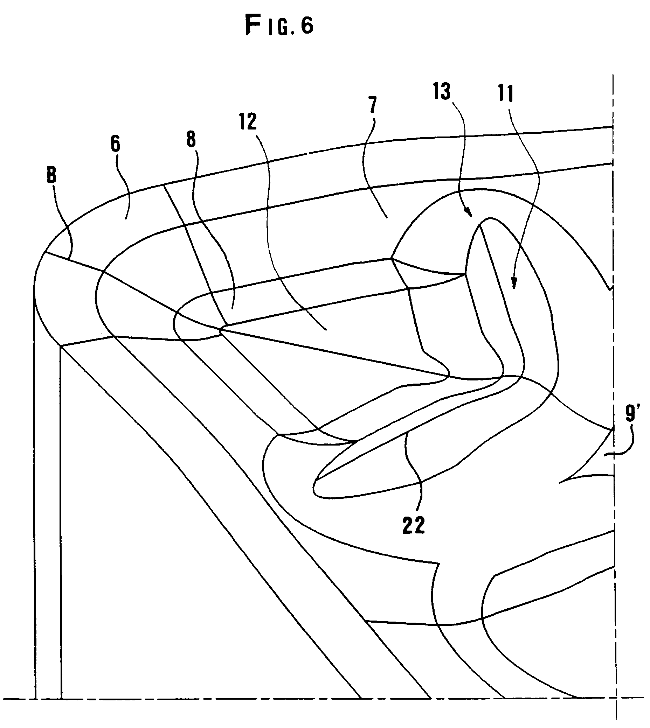

The cutting insert may be double-sided in accordance with figures 1 to 4, or single-sided in accordance with figures 5 and 6. At double-sided inserts, the upper and lower surfaces are substantially identical. Since in this case the chip surface also has to function as a support surface, the two sides are formed with seating surfaces 2. On the one hand, these seating surfaces should be as close to an operative cutting corner as possible in order to minimize the overhang and, thereby, the risk of a rupture, and on the other hand sufficient space must be at hand for accomodating the chip-forming geometry according to the invention. A good compromise has turned out to be that the distance between seating surface and cutting corner does not exceed 3,5 mm, preferably 2,5 mm.

Side surfaces 1 and the chip surface meet along edge lines which form main cutting edges 4. These can be wholly straight or they may for instance have a partially concave extension vertically. The rounded corners 3 adjoin the chip surface along rounded corner cutting edges 5. Along the whole periphery of the chip surface runs an edge-reinforcing land or primary face 6. Immediately inside this connects a downwardly sloping chip surface 7, which transposes into a substantially horizontal land 9 via a radius surface 8.

The essential feature of the present invention is that in each corner on the chip surface there is a banana-, boomerang- or C-like recess 11, whose concave side is directed towards the corner. Between this recess and the corner, with pertaining parts 6, 7 and 8, there is a substantially horizontal surface part 12, which preferably is on a somewhat higher level than land 9, suitably between 0 and 0,25 mm higher. On double-sided inserts the central part of the convex side of the protrusion, which side is turned towards the centre of the cutting insert, immediately connects to a seating surface 2. However, this direct transposition from the protrusion 11 to the seating surface 2, without any intermediate lower portion, should amount to maximally a third, preferably a fifth, of the total length of the protrusion, inter alia in order to not unnecessarily enhance the heat transfer to seating surface 2 and to not obstruct the chip flow at larger cutting depths. However, at single-sided cutting inserts the banana- or C-like protrusion may be entirely detached, as may be seen in figure 5.

The curved basic configuration of the protrusion shall include an inwardly curved surface 15 facing towards the cutting corner, which surface stands up from the horizontal plane, two end portions 13,13', and a sloping surface portion 20 (possibly in two parts), all this in a direction away from the cutting corner. Thanks to this configuration, a double-function has been conferred to the protrusion 11:
a) At small cutting depths, such as < 2 mm, the chip comes into contact with rear portion 14 of the protrusion 11, seen in the direction of cutting, this contributing to a curving and a breaking of the chip and giving a perfectly satisfactory chip control. The formed chips do not come into contact with the surface of the work-piece but are curved and deviate towards the rear, non-operative main cutting edge and side surface.
b) At larger cutting depths, in particular when the width of the chip exceeds the double distance between the surface being formed on the work-piece and the end portion 13 of the protrusion, the chip will mainly come into contact with the front end portion 13 of the protrusion, seen in the direction of cutting, and is curved, and possibly also broken, against said end portion. Thus, also in this case the protrusion carries the chip away from the work-piece.

The height of protrusion 11 relative to the reference plane 9 should not be less than 0,02 mm in order to at all attain the desired chip forming effects. On the other hand, the height of the protrusion should not exceed 0,5 mm above the cutting edge of the point radius, in order to not unnecessarily increase the cutting forces. Preferably, the height of the protrusion does not exceed the height of the corner edge at the corner bisector. More precisely, the highest point of the protrusion should be between 0 and 0,4 mm, preferably between 0 and 0,2 mm, below the intersection between the corner edge and the bisector. The radius of curvature of the protrusion should not be less than a fourth of the corner radius, whereby the average radius of curvature of the protrusion is meant. The upper limit of the radius of curvature is suitably 10 mm, preferably 7 mm and in particular 5 mm. Of course, this limit is also dependent upon the size of the cutting insert and upon the point radius of the insert. At some applications, average radii of curvature as small as 0,2 mm have been used.

The position of protrusion 11 in relation with the point radius may vary along the cross-section of the bisector from the centre of the point radius to about 4 times the point radius, counted from the intersection of the corner cutting edge with the bisector. It extendes substantially symmetrically in the two directions, from the bisector.

In figure 6 one can see the detailed shape of the protrusion 11 in accordance with a prefered embodiment, according to which the protrusion has a more boomerang-like configuration. The bisector is designated B and the ridge line of the protrusion is designated 22. In order to easy the chip flow at larger cutting depths, the end portion 13 of the protrusion overlaps with chip surface 7, the substantially plane surface 12 being clearly delimited all around. Surface 12 is situated 0 to 0,25 mm above surface 9'. Further, in its central part protrusion 11 may have a portion 20 which is vertically somewhat lower, also this with the aim of not obstructing the chip flow. Suitably, this depression 20 may be between 0,05 and 0,2 mm lower than the highest points of the protrusion. However, it should be pointed out again that preferably no point of the protrusion 11 is higher than the corner cutting edge. In order to make possible a longer projection of the protrusion relative to the direction of the chip flow at small cutting depths, the protrusion may have a bend at the intersection with bisector B, whereby the protrusion gets a more "boomerang-like" appearance. The protrusion has a rounded profile along the whole ridge 22, which minimizes the contact surface, and thereby also the friction forces and the heat transfer from the chips to the insert.

In connection with wider chips, protrusion 11 may cooperate with substantially spherically concave recesses 16 known per se, which are arranged adjacent to each other, behind the pertaining main cutting edge. Thereby ridges 17 emerge between recesses 16, which ridges contribute to a lower heat transfer to the cutting insert and a steering of the chips away from the work-piece.

All other geometrical configuration of the chip surface as illustrated in figures 1 and 4, is not essential for the present invention and may be varied within wide ranges. Thus, a single-sided insert may for instance be made completely plane, with the exception of the protrusion(s) 11, since no seating surfaces as surfaces 2 and 18 are then required. Further, recesses 16 may be dispensed with, in particular if the insert is intended for being used at small cutting depths.

Figure 5 shows an operative cutting corner of a single-sided cutting insert. This has a considerably simplified geometry in comparison with the double-sided insert according to figures 1 - 4, but anyway it has the protrusion 11 which is essential for the invention. Moreover, also this insert is formed with an edge-reinforcing land or primary face 6, which connects to an essentially horizontal area 9' via a substantially plane chip surface 7 and a radius 8, as shown in the figure. The ends of protrusion 11 overlaps with said radius, and also with chip surface 7. The inversion line between the concave and convex radii of the protrusion is designated 21. Moreover, the cutting insert is provided with bumps 19 which function as chip breakers at larger cutting depths in a way known per se.

Of cutting economy reasons, at least two corners should be formed as operative cutting corners, comprising the elongate protrusion according to the present invention. However, within the frame of the present invention also cutting inserts with only one operative cutting corner are conceivable.

Also other polygonal basic shapes are possible, for both single- and double-sided indexable inserts. Thus, the invention also foresees for instance square, triangular and rectangular cutting inserts.

The angle between the lower surface and the side surfaces 1 are suitably between 90 and 110°, preferrably between 90 and 100°.

Suitably, the inserts are produced with a through centre hole for the fastening of the insert in the insert pocket by a suitable screw, locking pin or similar.

## Claims

1. Cutting insert for chip-breaking metal machining comprising an upper chip surface, a lower surface being substantially plane-parallel with said upper surface and at least three side surfaces (1) extending between those two surfaces, adjacent side surfaces (1) meeting at rounded corners (3) and at least one corner connecting to the chip surface along lines which form a main cutting edge (4) and a corner cutting edge (5), respectively,
**characterized** in that an elongate curved protrusion (11) is provided adjacent to at least one corner cutting edge, the concave side of this protrusion being directed towards the corner, in that the height of said protrusion does not exceed the height of the corner cutting edge (5) at the corner bisector, in that the main cutting edge (4) and the corner cutting edge (5) connect to an edge-reinforcing land (6) on the chip surface, said protrusion (11) and corner cutting edge (5) with its edge-reinforcing land (6) delimiting a surface (12) which is located on a lower level than said land (6) and protrusion (11).

2. Cutting insert according to claim 1,
**characterized** in that it is double-sided, both the upper and the lower surfaces having seating surfaces (2, 18) for abutment against a support.

## Patentansprüche

1. Schneideinsatz für die spanende Metallbearbeitung mit Spanbrechen, welcher eine obere Spanfläche aufweist, wobei eine untere Fläche im wesentlichen planparallel zu der oberen Fläche ist, und mit zumindest drei Seitenflächen (1), die sich zwischen diesen beiden Flächen erstrecken, wobei benachbarte Seitenflächen (1), die an abgerundeten Ecken (3) zusammentreffen, und zumindest eine Ecke an die Spanfläche entlang von Linien anschließen, die eine Hauptschneidkante (4) bzw. eine Eckschneidkante (5) bilden, **dadurch gekennzeichnet**, daß ein länglicher, gekrümmter Vorsprung (11) neben zumindest einer Eckschneidkante vorgesehen ist, wobei die konkave Seite dieses Vorsprunges der Ecke zugewandt ausgerichtet ist, daß die Höhe des Vorsprunges nicht die Höhe der Eckschneidkante (5) an der Winkelhalbierenden der Ecke übersteigt, daß die Hauptschneidkante (4) und die Eckschneidkante (5) an eine die Kante verstärkende Fase (6) an der Spanfläche anschließen, wobei der Vorsprung (11) und die Eckschneidkante (5) mit ihrer die Kante verstärkenden Fase (6) eine Fläche (12) begrenzen, die auf einem niedrigeren Niveau liegt als die Fase (6) und der Vorsprung (11).

2. Schneideinsatz nach Anspruch 1, dadurch gekennzeichnet, daß er doppelseitig ausgebildet ist, wobei sowohl die obere als auch die untere Fläche Sitzflächen (2, 8) sind für die Anlage an einer Stütze bzw. Halterung haben.

## Revendications

1. Plaquette de coupe pour l'usinage de métal avec bris des copeaux, comprenant une surface supérieure d'enlèvement de copeaux, une surface inférieure qui est pratiquement parallèle au plan de ladite surface supérieure, et au moins trois surfaces latérales (1) s'étendant entre ces deux surfaces, les surfaces latérales adjacentes (1) se rencontrant au niveau d'arrondis de bec (3) et au moins un bec rejoignant la surface d'enlèvement de copeaux suivant des lignes qui forment une arête tranchante principale (4) et une arête de bec (5), respectivement,
caractérisée en ce qu'une saillie incurvée allongée (11) est réalisée à proximité d'au moins une arête de bec, le côté concave de cette saillie étant orienté vers le bec, en ce que la hauteur de ladite saillie ne dépasse pas la hauteur de l'arête de bec (5) au niveau de la bissectrice du bec, en ce que l'arête tranchante principale (4) et l'arête de bec (5) rejoignent un listel de renforcement d'arête (6) sur la surface d'enlèvement de copeaux, ladite saillie (11) et ladite arête de bec (5) ainsi que son listel de renforcement d'arête (6) délimitant une surface (12) qui est située à un niveau plus bas que ledit listel (6) et ladite saillie (11).

2. Plaquette de coupe selon la revendication 1, caractérisée en ce qu'elle est a double face, les surfaces supérieure et inférieure comportant toutes deux des embases (2, 18) destinées à venir en butée sur un support.
